# EUROPEAN PATENT APPLICATION

(11) **EP 2 347 682 A1**
(43) Date of publication of application: **27.07.2011**
(21) Application number: 09824696.0
(22) Date of filing: 09.10.2009
(51) Int. Cl.: A47F 5/00, G06F 1/32, G07G 1/12, G09G 5/00

(54) **ELECTRONIC SHELF LABEL SYSTEM, PROCESSING METHOD, ELECTRONIC SHELF LABEL, AND PROGRAM**

(30) Priority: 07.11.2008 JP 2008286667
(71) Applicant: Seiko Instruments Inc., Chiba-shi Chiba 261-8507 (JP)
(72) Inventor: KONO, Shigeru, Chiba-shi Chiba 261-8507 (JP); OKINA, Shigetaka, Chiba-shi Chiba 261-8507 (JP); IZAKI, Shozo, Chiba-shi Chiba 261-8507 (JP)
(74) Representative: Cloughley, Peter Andrew
(86) International application number: PCT/JP2009/067678
(87) International publication number: WO 2010/052996

(57) **Abstract**

To suppress power consumption when product information is not received from a server apparatus. A transmission section (302) of an electronic shelf label (300-1) transmits a registration request signal to the server apparatus. A transmission interval determining section (308) extends a transmission interval of the registration request signal in a stepwise manner in accordance with a time length of an asynchronous state in which a response signal is not received in response to the registration request signal from the server apparatus. A terminal state request signal generating section (305) generates a terminal state request signal making a request to another electronic shelf label that terminal state information be transmitted, and the transmission section (302) transmits the generated terminal state request signal. After receiving the terminal state request signal, the another electronic shelf label transmits the terminal state information. After receiving the terminal state information, the electronic shelf label (300-1) updates, based on the received terminal state information, the time length of the asynchronous state in which the response signal is not received.

## Description

### Technical Field

The present invention relates to an electronic shelf label system for causing an electronic shelf label to perform radio communication with a server apparatus so as to receive and display display information, and a processing method therefor. The present invention also relates to an electronic shelf label and its program.

### Background Art

Conventionally, in stores such as supermarkets and convenience stores, in cooperation with a server apparatus such as a point of sale (POS) system, there has been used an electronic shelf label system in which an electronic shelf label provided with a display section such as a liquid crystal display receives such product information as a sales price from the server apparatus and displays the received product information (for example, see Patent Literature 1). The adoption of the electronic shelf label system eliminates a discrepancy between the sales price managed by the server apparatus and the sales price displayed by the electronic shelf label, and hence a consumer can be informed of a proper sales price.

In this case, the electronic shelf label becomes synchronized with the server apparatus to intermittently receive the product information. Further, in general, the server apparatus is connected to a relay apparatus, and the relay apparatus transmits the product information to the electronic shelf label by radio.

Note that, Patent Literature 2 discloses a technology for achieving lower power consumption of the electronic shelf label.

### Citation List

### Patent Literature

Patent Literature 1: JP 3600237 B2
Patent Literature 2: JP 2008-168057 A

### Summary of Invention

### Technical Problem

However, the electronic shelf label continues a reception operation for the product information when the relay apparatus is powered off, when the electronic shelf label exists outside a communicable area of the relay apparatus, when the product information is not sent from the server apparatus, or the like. Further, the electronic shelf label is generally driven by a battery, and thus keeps consumingpower if the reception operation is continued. Therefore, there is a problem that the usable life of the battery becomes shorter because the reception operation is continued in a state in which the product information is not received from the server apparatus.

In view of the above-mentioned problem, the present invention has been made, and therefore has an object to provide an electronic shelf label system, a processing method therefor, and an electronic shelf label and its program, which are capable of suppressing power consumption when product information is not received from a server apparatus.

### Solution to Problem

In order to solve the above-mentioned problem, the present invention has been made, and thus provides an electronic shelf label system, including: a server apparatus; and a plurality of electronic shelf labels, each of which performs radio communication with the server apparatus to receive display information from the server apparatus and displays the display information, in which the server apparatus includes: registration request signal receiving means for receiving, from each of the plurality of electronic shelf labels, a registration request signal making a request that the each of the plurality of electronic shelf labels be registered as a transmission destination of the display information; and response signal transmitting means for transmitting a response signal in response to the registration request signal when the registration request signal is received, and in which the each of the plurality of electronic shelf labels includes: registration request signal transmitting means for transmitting the registration request signal to the server apparatus at predetermined transmission intervals; response signal receiving means for receiving the response signal from the server apparatus; other-terminal state acquiring means for acquiring terminal state information when the response signal is not received, the terminal state information being information related to a transmission interval of the registration request signal of another electronic shelf label; transmission interval synchronizing means for determining the transmission interval of the registration request signal based on the terminal state information of the another electronic shelf label; and transmission interval determining means for extending, when the terminal state information is not acquired from the another electronic shelf label, the transmission interval of the registration request signal in a stepwise manner in accordance with a time length of an asynchronous state in which the response signal is not received from the server apparatus.

Further, according to the present invention, the other-terminal state acquiring means of the each of the plurality of electronic shelf labels includes: terminal state request signal transmitting means for transmitting, to the another electronic shelf label, a terminal state request signal making a request that the terminal state information be transmitted; and terminal state information receiving means for receiving the terminal state information from the another electronic shelf label, and the each of the plurality of electronic shelf labels further includes: terminal state request signal receiving means for receiving the terminal state request signal; and terminal state information transmitting means for transmitting the terminal state information.

Further, according to the present invention: the registration request signal transmitted by the registration request signal transmitting means of the each of the plurality of electronic shelf labels contains the terminal state information; the other-terminal state acquiring means of the each of the plurality of electronic shelf labels includes other-terminal registration request signal receiving means for receiving the registration request signal transmitted by the another electronic shelf label; and the transmission interval synchronizing means of the each of the plurality of electronic shelf labels determines the transmission interval based on the terminal state information contained in the registration request signal transmitted by the another electronic shelf label.

Further, according to the present invention, the terminal state information includes the transmission interval.

Further, according to the present invention, the terminal state information includes the time length of the asynchronous state in which the response signal is not received from the server apparatus.

Further, the present invention provides a processing method, which uses an electronic shelf label system including: a server apparatus; and a plurality of electronic shelf labels, each of which performs radio communication with the server apparatus to receive display information from the server apparatus and displays the display information, the processing method including: receiving, by registration request signal receiving means of the server apparatus, from each of the plurality of electronic shelf labels, a registration request signal making a request that the each of the plurality of electronic shelf labels be registered as a transmission destination of the display information; transmitting, by response signal transmitting means of the server apparatus, a response signal in response to the registration request signal when the registration request signal is received; transmitting, by registration request signal transmitting means of the each of the plurality of electronic shelf labels, the registration request signal to the server apparatus at predetermined transmission intervals; receiving, by response signal receiving means of the each of the plurality of electronic shelf labels, the response signal from the server apparatus; acquiring, by other-terminal state acquiring means of the each of the plurality of electronic shelf labels, terminal state information when the response signal is not received, the terminal state information being information related to a transmission interval of the registration request signal of another electronic shelf label; determining, by transmission interval synchronizing means of the each of the plurality of electronic shelf labels, the transmission interval of the registration request signal based on the terminal state information of the another electronic shelf label; and extending, by transmission interval determining means of the each of the plurality of electronic shelf labels, when the terminal state information is not acquired from the another electronic shelf label, the transmission interval of the registration request signal in a stepwise manner in accordance with a time length of an asynchronous state in which the response signal is not received from the server apparatus.

Further, the present invention provides an electronic shelf label, which performs radio communication with a server apparatus to receive display information from the server apparatus and displays the display information, the electronic shelf label including: registration request signal transmitting means for transmitting a registration request signal to the server apparatus at predetermined transmission intervals, the registration request signal making a request that the electronic shelf label be registered as a transmission destination of the display information; response signal receiving means for receiving, from the server apparatus, a response signal in response to the registration request signal; other-terminal state acquiring means for acquiring terminal state information when the response signal is not received, the terminal state information being information related to a transmission interval of the registration request signal of another electronic shelf label existing within a communicable range; transmission interval synchronizing means for determining the transmission interval of the registration request signal based on the terminal state information of the another electronic shelf label; and transmission interval determining means for extending, when the terminal state information is not acquired from the another electronic shelf label, the transmission interval of the registration request signal in a stepwise manner in accordance with a time length of an asynchronous state in which the response signal is not received from the server apparatus.

Further, the present invention provides a program for causing an electronic shelf label, which performs radio communication with a server apparatus to receive display information from the server apparatus and displays the display information, to operate as: registration request signal transmitting means for transmitting a registration request signal to the server apparatus at predetermined transmission intervals, the registration request signal making a request that the electronic shelf label be registered as a transmission destination of the display information; response signal receiving means for receiving, from the server apparatus, a response signal in response to the registration request signal; other-terminal state acquiring means for acquiring terminal state information when the response signal is not received, the terminal state information being information related to a transmission interval of the registration request signal of another electronic shelf label existing within a communicable range; transmission interval synchronizing means for determining the transmission interval of the registration request signal based on the terminal state information of the another electronic shelf label; and transmission interval determining means for extending, when the terminal state information is not acquired from the another electronic shelf label, the transmission interval of the registration request signal in a stepwise manner in accordance with a time length of an asynchronous state in which the response signal is not received from the server apparatus.

### Advantageous Effects of Invention

According to the present invention, the electronic shelf label extends the transmission interval in a stepwise manner in accordance with the time length of the asynchronous state in which the response signal is not received from the server apparatus. Further, the electronic shelf label acquires the terminal state information, which is information related to a transmission timing, from the another electronic shelf label, to thereby determine the next transmission timing based on the terminal state information. Therefore, when the transmission interval of the electronic shelf label is shorter than the transmission interval of the another electronic shelf label, it is possible to make the transmission interval of the electronic shelf label identical to the transmission interval of the another electronic shelf label. With this configuration, the power consumption of the electronic shelf label can be suppressed to be low.

### Brief Description of Drawings

[FIG. 1] A configuration diagram of an electronic shelf label system according to a first embodiment of the present invention.
[FIG. 2] A schematic block diagram illustrating a configuration of a server apparatus according to the first embodiment of the present invention.
[FIG. 3] A schematic block diagram illustrating a configuration of an electronic shelf label according to the first embodiment of the present invention.
[FIG. 4] A diagram illustrating an example of a transmission interval table stored in a transmission interval storage section.
[FIG. 5] A flow chart illustrating operation of the electronic shelf label according to the first embodiment of the present invention.
[FIG. 6] A first sequence diagram illustrating operation of the electronic shelf label system according to the first embodiment of the present invention.
[FIG. 7] A second sequence diagram illustrating the operation of the electronic shelf label system according to the first embodiment of the present invention.
[FIG. 8] A schematic block diagram illustrating a configuration of an electronic shelf label according to a second embodiment of the present invention.
[FIG. 9] A flow chart illustrating operation of the electronic shelf label according to the second embodiment of the present invention.
[FIG. 10] A sequence diagram illustrating operation of an electronic shelf label system according to the second embodiment of the present invention.

### Description of Embodiments

### (First Embodiment)

Hereinafter, with reference to the drawings, a first embodiment of the present invention is described in detail.

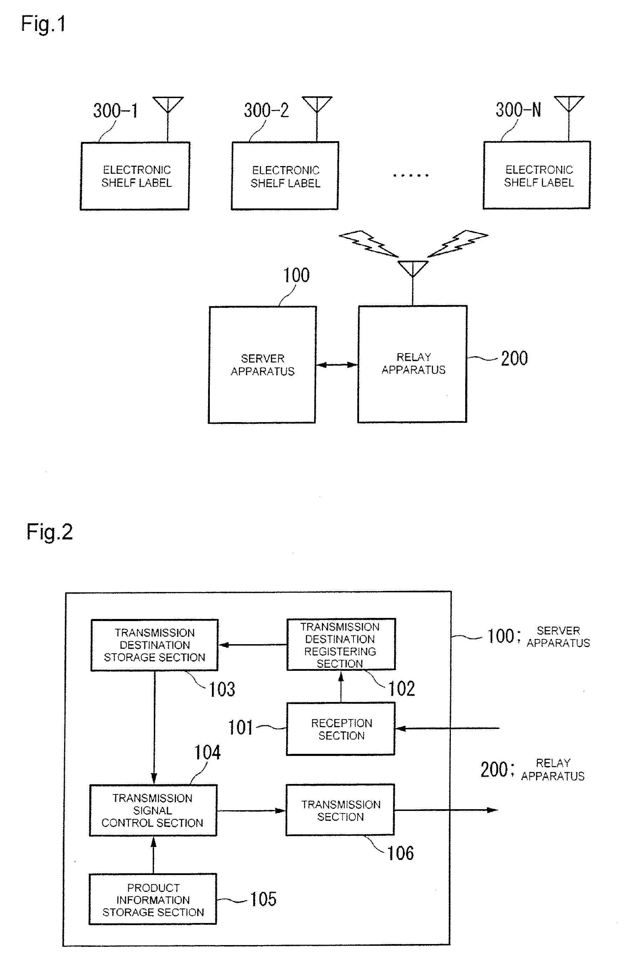

FIG. 1 is a configuration diagram of an electronic shelf label system according to the first embodiment of the present invention.

The electronic shelf label system includes a server apparatus 100, a relay apparatus 200, and a plurality of electronic shelf labels 300-1 to 300-N (first electronic shelf label and second electronic shelf label).

Based on such product information as a sales price, the server apparatus 100 generates display information to be displayed on the electronic shelf labels 300-1 to 300-N, and then transmits, via the relay apparatus 200, the display information to the electronic shelf labels 300-1 to 300-N, which are registered with the server apparatus 100 as transmission destinations. Note that, by receiving registration request signals from the respective electronic shelf labels 300-1 to 300-N, the server apparatus 100 registers, as the transmission destinations of the display information, the electronic shelf labels 300-1 to 300-N, which are transmission sources of the received registration request signals.

The electronic shelf labels 300-1 to 300-N each transmit the registration request signal to the server apparatus 100 via the relay apparatus 200. Further, the electronic shelf labels 300-1 to 300-N each receive the display information from the server apparatus 100 via the relay apparatus 200, and then display information on products in accordance with the received display information.

FIG. 2 is a schematic block diagram illustrating a configuration of the server apparatus according to the first embodiment of the present invention.

The server apparatus 100 includes a reception section 101 (registration request signal receiving means), a transmission destination registering section 102, a transmission destination storage section 103, a transmission signal control section 104, a product information storage section 105, and a transmission section 106 (response signal transmitting means).

The reception section 101 receives the signals from the electronic shelf labels 300-1 to 300-N via the relay apparatus 200.

After the reception section 101 receives the registration request signals from the electronic shelf labels 300-1 to 300-N, the transmission destination registering section 102 registers in the transmission destination storage section 103 the electronic shelf labels 300-1 to 300-N, which are the transmission sources of the registration request signals.

The transmission signal control section 104 generates response signals in response to the registration request signals received by the reception section 101. Further, in accordance with the product information stored in the product information storage section 105, the transmission signal control section 104 generates the display information to be transmitted to the electronic shelf labels 300-1 to 300-N stored in the transmission destination storage section 103.

The transmission section 106 transmits the signals created by the transmission signal control section 104 to the electronic shelf labels 300-1 to 300-N via the relay apparatus 200.

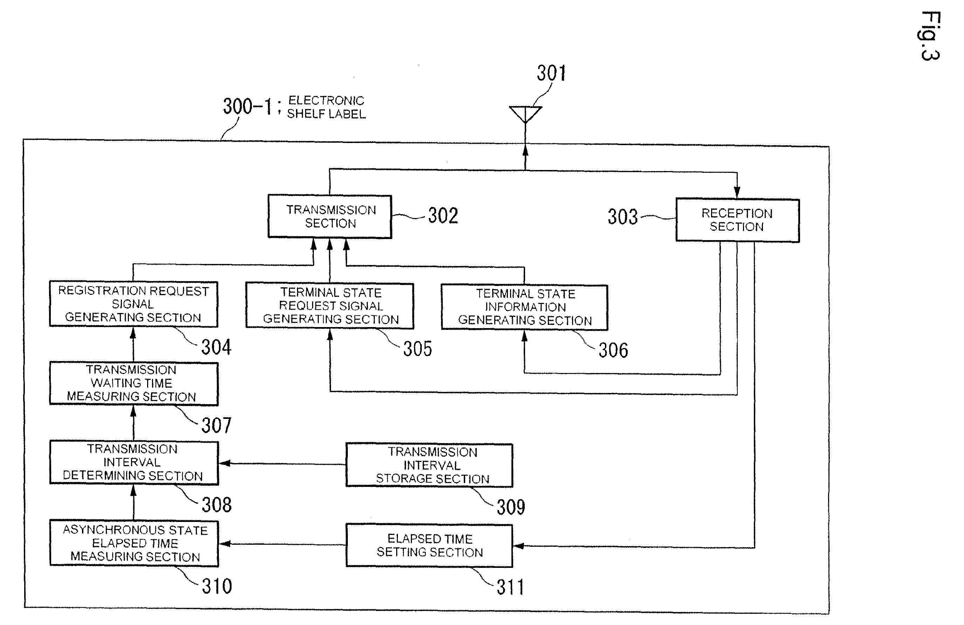

FIG. 3 is a schematic block diagram illustrating a configuration of the electronic shelf label according to the first embodiment of the present invention.

Description is herein given of the electronic shelf label 300-1 as a representative of the electronic shelf labels 300-1 to 300-N. Note that, needless to say, the electronic shelf labels 300-2 to 300-N have the same configuration as the electronic shelf label 300-1.

The electronic shelf label 300-1 includes an antenna section 301, a transmission section 302 (registration request signal transmitting means, terminal state request signal transmitting means, and terminal state information transmitting means), a reception section 303 (response signal receiving means, terminal state information receiving means, terminal state request signal receiving means, and other-terminal registration request signal receiving means), a registration request signal generating section 304, a terminal state request signal generating section 305, a terminal state information generating section 306, a transmission waiting time measuring section 307, a transmission interval determining section 308 (transmission interval determining means), a transmission interval storage section 309, an asynchronous state elapsed time measuring section 310, and an elapsed time setting section 311 (transmission interval synchronizing means).

The transmission section 302 transmits a signal generated by the registration request signal generating section 304 to the relay apparatus 200 via the antenna section 301, and transmits signals generated by the terminal state request signal generating section 305 and by the terminal state information generating section 306 to the other electronic shelf labels 300-2 to 300-N via the antenna section 301.

The reception section 303 receives the response signal, a display signal, and such other signals from the relay apparatus 200 via the antenna section 301, and receives a terminal state request signal and terminal state information from each of the other electronic shelf labels 300-2 to 300-N.

The registration request signal generating section 304 generates the registration request signal making a request to the server apparatus 100 that the corresponding terminal be registered as the transmission destination of the display information, and then sends the generated signal to the transmission section 302.

When the response signal is not received in response to the registration request signal that has been transmitted to the server apparatus, the terminal state request signal generating section 305 generates the terminal state request signal making a request to the other electronic shelf labels 300-2 to 300-N that the terminal state information indicating the transmission interval of the registration request signal be transmitted, and then sends the generated signal to the transmission section 302.

When the terminal state request signal is received from one of the other electronic shelf labels 300-2 to 300-N, the terminal state information generating section 306 generates the terminal state information of the corresponding terminal based on information determined by the transmission interval determining section 308, and then sends the generated information to the transmission section 302.

The transmission waiting time measuring section 307 measures a time period taken before the transmission of the registration request signal is started.

The transmission interval determining section 308 determines the transmission interval of the registration request signal based on a transmission interval table stored in the transmission interval storage section 309 and a time period measured by the asynchronous state elapsed time measuring section 310.

The transmission interval storage section 309 stores in advance the transmission interval table holding, in association with each other, a time length of an asynchronous state in which the response signal is not received from the server apparatus 100 (hereinafter, referred to as asynchronous state elapsed time) and the transmission interval of the registration request signal.

The asynchronous state elapsed time measuring section 310 measures the asynchronous state elapsed time.

The elapsed time setting section 311 rewrites the asynchronous state elapsed time, which is being measured by the asynchronous state elapsed time measuring section 310, based on the terminal state information received by the reception section 303 from the other electronic shelf labels 300-2 to 300-N.

Note that, though not illustrated, the electronic shelf label 300-1 includes, among others, a synchronous communication control section for performing synchronous communication with the server apparatus 100 after receiving the response signal by the reception section 303, a storage section for storing the received display signal when the reception section 303 receives the display information from the server apparatus, a display section for displaying the display information stored in the storage section, and a battery for supplying power to the electronic shelf label 300-1.

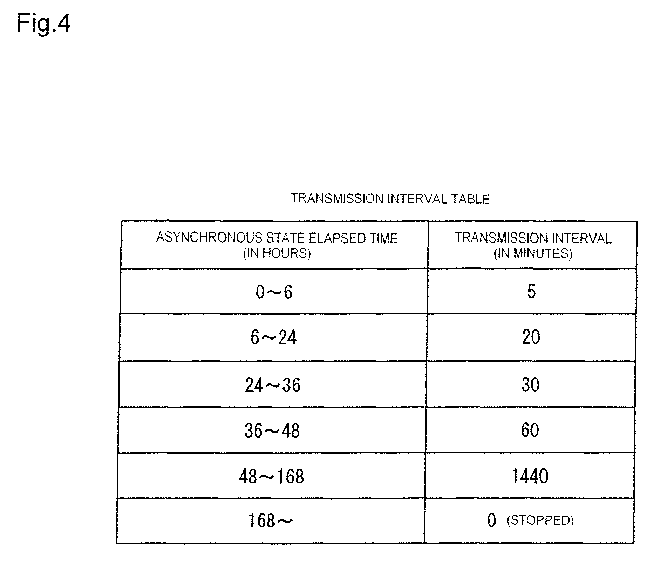

FIG. 4 is a diagram illustrating an example of the transmission interval table stored in the transmission interval storage section.

The transmission interval table holds the asynchronous state elapsed time and the transmission interval in association with each other. Referring to the transmission interval table illustrated in FIG. 4, the transmission interval is extended in a stepwise manner in accordance with the length of the asynchronous state elapsed time. Specifically, the transmission interval table shows that as the asynchronous state becomes longer, the transmission interval of the registration request signal is made longer. Further, the transmission interval table illustrated in FIG. 4 shows that the function of the corresponding terminal is stopped when the asynchronous state elapsed time has exceeded 168 hours.

The electronic shelf label system includes the server apparatus 100 and the electronic shelf labels 300-1 to 300-N, and the server apparatus 100 receives the registration request signals from the electronic shelf labels 300-1 to 300-N and transmits, after receiving the registration request signals, the response signals in response to the respective registration request signals. Further, the electronic shelf labels 300-1 to 300-N each transmit the registration request signal to the server apparatus 100 at predetermined transmission intervals, receive the response signal from the server apparatus 100, and extend the transmission interval in a stepwise manner in accordance with the asynchronous state elapsed time. Then, when the response signal is not received, the terminal state information, which is information related to the transmission interval of the registration request signal of the other electronic shelf labels among the electronic shelf labels 300-1 to 300-N, is received, and the asynchronous state elapsed time is determined based on the terminal state information of the other electronic shelf labels among the electronic shelf labels 300-1 to 300-N.

With this configuration, the power consumption of the electronic shelf labels 300-1 to 300-N is suppressed to be low.

Hereinafter, description is given of operation of the server apparatus 100 according to the first embodiment of the present invention.

First, description is given of operation in which the server apparatus 100 transmits the display information to the electronic shelf labels 300-1 to 300-N registered as the transmission destinations.

In accordance with the product information stored in the product information storage section 105, the transmission signal control section 104 generates the display information to be transmitted to the electronic shelf labels 300-1 to 300-N stored in the transmission destination storage section 103. After the transmission signal control section 104 generates the display information, the transmission section 106 transmits the display information via the relay apparatus 200 to the electronic shelf labels 300-1 to 300-N stored in the transmission destination storage section 103.

Next, description is given of operation performed when the server apparatus 100 has received the registration request signals from the electronic shelf labels 300-1 to 300-N.

After the reception section 101 receives the registration request signals from the electronic shelf labels 300-1 to 300-N via the relay apparatus 200, the transmission destination registering section 102 registers, as the transmission destinations of the display information, the electronic shelf labels 300-1 to 300-N, which are the transmission sources of the registration request signals, in the transmission destination storage section 103. After the transmission destination registering section 102 registers the electronic shelf labels 300-1 to 300-N in the transmission destination storage section 103, the transmission signal control section 104 generates the response signals to be transmitted to the electronic shelf labels 300-1 to 300-N, which are the transmission sources of the registration request signals. After the transmission signal control section 104 generates the response signals, the transmission section 106 transmits the generated response signals to the electronic shelf labels 300-1 to 300-N, which are the transmission sources of the registration request signals.

Hereinafter, description is given of operation of the electronic shelf label 300-1 according to the first embodiment of the present invention.

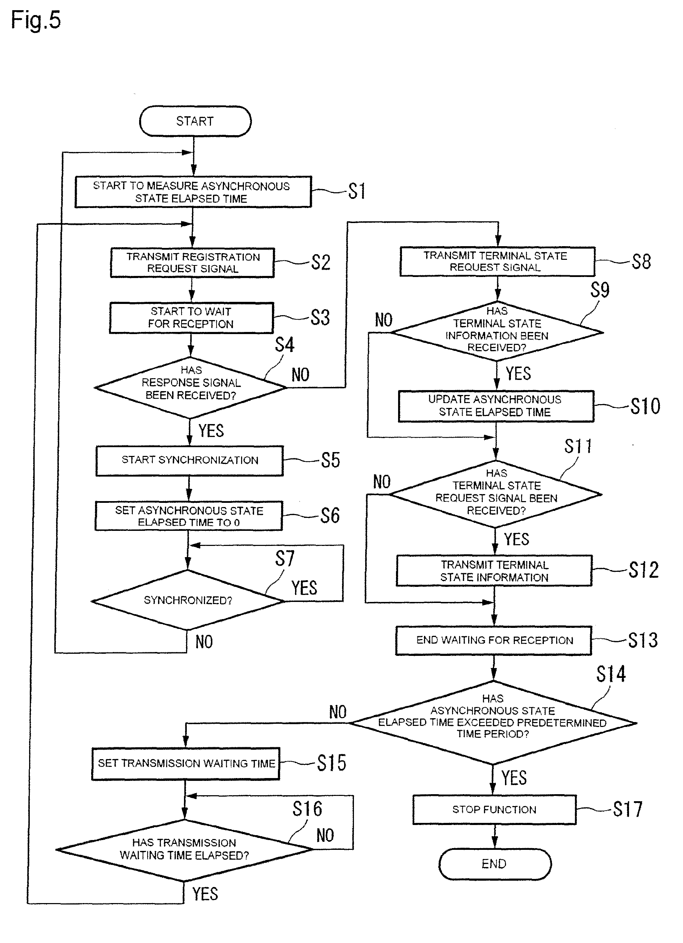

FIG. 5 is a flow chart illustrating the operation of the electronic shelf label according to the first embodiment of the present invention.

First, after the electronic shelf label 300-1 is activated by, for example, the power-on of the electronic shelf label 300-1, the asynchronous state elapsed time measuring section 310 starts to measure the asynchronous state elapsed time (Step S1). After the asynchronous state elapsed time measuring section 310 starts to measure the asynchronous state elapsed time, the registration request signal generating section 304 generates the registration request signal. After the registration request signal generating section 304 generates the registration request signal, the transmission section 302 transmits the registration request signal to the server apparatus 100 via the relay apparatus 200 (Step S2). After the transmission section 302 transmits the registration request signal, the reception section 303 starts to wait for reception (Step S3). After starting to wait for reception, the reception section 303 determines whether or not the response signal has been received from the server apparatus 100 during a response signal reception waiting period determined in advance (Step S4).

When the reception section 303 has received the response signal from the server apparatus 100 (Step S4: YES), the electronic shelf label 300-1 starts the synchronous communication with the server apparatus 100 via the relay apparatus 200 (Step S5). Specifically, with the reception of the response signal being a trigger, in accordance with a timing at which the server apparatus 100 transmits synchronization information, the display information, and the like, the electronic shelf label 300-1 waits for reception thereof during a period necessary for the reception of such information. With this configuration, the electronic shelf label 300-1 can periodically receive the synchronization information indicating that the electronic shelf label 300-1 is in synchronization from the server apparatus 100, and can receive the display information and the like. Note that, after receiving the display information, the reception section 303 registers the received display information in the storage section (not shown) of the electronic shelf label 300-1. After the reception section 303 registers the display information, the display section (not shown) of the electronic shelf label 300-1 displays the received display information.

Further, after the electronic shelf label 300-1 starts the synchronous communication, the elapsed time setting section 311 sets to 0 the asynchronous state elapsed time, which is being measured by the asynchronous state elapsed time measuring section 310, and the asynchronous state elapsed time measuring section 310 stops measuring the asynchronous state elapsed time (Step S6).

The reception section 303 determines, while the synchronous communication is performed, whether or not the synchronization information is received (Step S7). When it is determined by the reception section 303 that the synchronization information is received (Step S7: YES), the reception section 303 continues the synchronous communication.

When it is determined by the reception section 303 that the synchronization information is not received (Step S7: NO), the reception section 303 stops the synchronous communication. After the reception section 303 stops the synchronous communication, the processing returns to Step S1, and the measuring of the asynchronous state elapsed time is started again.

In Step S4, when it is determined that the reception section 303 has not received the response signal (Step S4: NO), the terminal state request signal generating section 305 generates the terminal state request signal. After the terminal state request signal generating section 305 generates the terminal state request signal, the transmission section 302 transmits the terminal state request signal to the other electronic shelf labels 300-2 to 300-N (Step S8). After the transmission section 302 transmits the terminal state request signal, the reception section 303 determines whether or not the terminal state information has been received from at least one of the other electronic shelf labels 300-2 to 300-N (Step S9). When it is determined by the reception section 303 that the terminal state information has been received from at least one of the other electronic shelf labels 300-2 to 300-N (Step S9: YES), the elapsed time setting section 311 acquires, from the transmission interval storage section 309, the shortest time period, for example, of the asynchronous state elapsed time associated with the transmission interval indicated by the received terminal state information. For example, when the transmission interval indicated by the terminal state information is "30 minutes", referring to the transmission interval table (FIG. 4) stored in the transmission interval storage section 309, the asynchronous state elapsed time associated with the transmission interval of "30 minutes" is "24 to 36 hours". Accordingly, the elapsed time setting section 311 acquires "24 hours" as the asynchronous state elapsed time. After acquiring the asynchronous state elapsed time, the elapsed time setting section 311 updates, to the acquired asynchronous state elapsed time, the asynchronous state elapsed time stored in an internal memory of the asynchronous state elapsed time measuring section (Step S10).

When it is determined by the reception section 303 that the terminal state information has not been received from any of the other electronic shelf labels 300-2 to 300-N (Step S9: NO), or when the elapsed time setting section 311 has updated the asynchronous state elapsed time in Step S10, the reception section 303 determines whether or not the terminal state request signal has been received from at least one of the other electronic shelf labels 300-2 to 300-N (Step S11). When it is determined by the reception section 303 that the terminal state request signal has been received from at least one of the other electronic shelf labels 300-2 to 300-N (Step S11: YES), the terminal state information generating section 306 generates the terminal state information containing a current transmission interval. After the terminal state information is generated, the transmission section 302 transmits the terminal state information to the at least one of the electronic shelf labels 300-2 to 300-N, which is the transmission source of the terminal state request signal (Step S12).

When it is determined by the reception section 303 that the terminal state request signal has not been received from any of the other electronic shelf labels 300-2 to 300-N (Step S11: NO) , or when the transmission section 302 has transmitted the terminal state information in Step S12, the reception section 303 ends waiting for reception (Step S13). Note that, ending waiting for reception means stopping power supply to a radio function of the electronic shelf label 300-1 (transmission section 302, reception section 303, registration request signal generating section 304, terminal state request signal generating section 305, terminal state information generating section 306, and the like). Thus, by ending waiting for reception, it is possible to suppress the power consumption of the electronic shelf label 300-1. After the reception section 303 ends waiting for reception, the transmission interval determining section 308 refers to the transmission interval table stored in the transmission interval storage section 309, to thereby determine whether or not the asynchronous state elapsed time, which is being measured by the asynchronous state elapsed time measuring section 310, has exceeded a predetermined time period for stopping the function of the corresponding terminal (Step S14). Whether or not the predetermined time period for stopping the function of the corresponding terminal has been exceeded is determined by, for example, determining whether or not the asynchronous state elapsed time has exceeded 168 hours with reference to the transmission interval table illustrated in FIG. 4.

When it is determined by the transmission interval determining section 308 that the asynchronous state elapsed time has not exceeded the predetermined time period for stopping the function of the corresponding terminal (Step S14: NO), the transmission interval determining section 308 refers to the transmission interval table stored in the transmission interval storage section 309, to thereby acquire the transmission interval associated with the asynchronous state elapsed time that is being measured by the asynchronous state elapsed time measuring section 310. After acquiring the transmission interval, the transmission interval determining section 308 sets the acquired transmission interval as a transmission waiting time to be measured by the transmission waiting time measuring section 307 (Step S15). The transmission waiting time measuring section 307 starts to measure the transmission waiting time. After starting to measure the transmission waiting time, the transmission waiting time measuring section 307 determines whether or not the measured transmission waiting time has exceeded the set transmission waiting time (Step S16). When it is determined that the measured transmission waiting time has not exceeded the set transmission waiting time (Step S16: NO), the transmission waiting time measuring section 307 continues measuring the transmission waiting time.

When it is determined that the transmission waiting time that is being measured by the transmission waiting time measuring section 307 has exceeded the set transmission waiting time (Step S16: YES) , theprocessingreturns to Step S2, in which the registration request signal is generated and transmitted.

When it is determined by the transmission interval determining section 308 that the asynchronous state elapsed time has exceeded the predetermined time period for stopping the function of the corresponding terminal (Step S14: YES), the electronic shelf label 300-1 enters into a function-stopped state through processing of, for example, shutting off its own power supply (Step S17). With this configuration, it is possible to suppress the power consumption by stopping the function when synchronization with the server apparatus 100 cannot be achieved for a long period of time.

Note that, when the electronic shelf label 300-1 is in the function-stopped state, the electronic shelf label 300-1 can be powered on again by, for example, depressing a power button (not shown) thereof. Further, it is also possible to suppress the power consumption by forcibly shutting off the power supply by depressing and holding the power button while the electronic shelf label 300-1 is activated.

Next, description is given of operation of the electronic shelf label system according to the first embodiment of the present invention.

First, description is given of operation performed by the electronic shelf label system in a case in which the electronic shelf label 300-1 succeeds in communicating with the server apparatus 100.

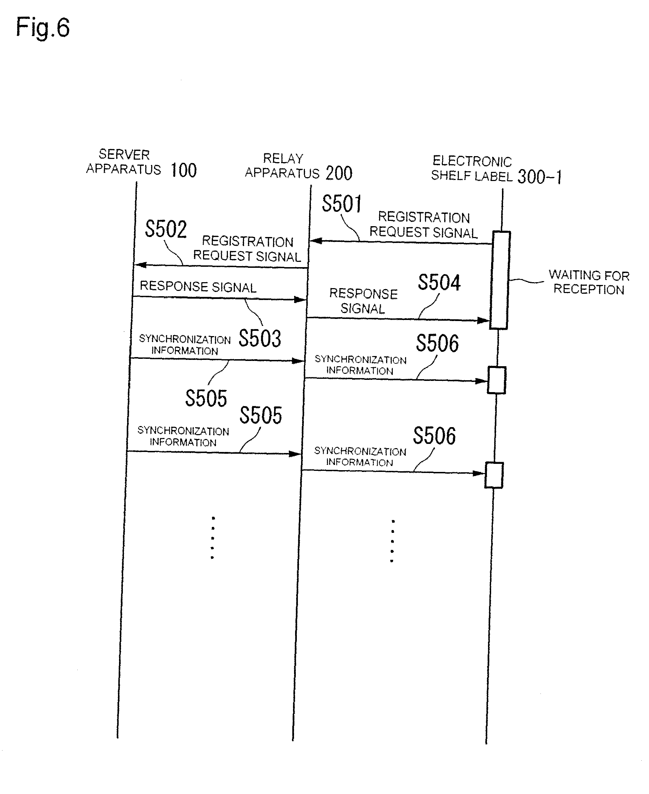

FIG. 6 is a first sequence diagram illustrating the operation of the electronic shelf label system according to the first embodiment of the present invention.

The operation of the electronic shelf label system illustrated in FIG. 6 is performed in the case in which the electronic shelf label 300-1 succeeds in communicating with the server apparatus 100 according to the first embodiment of the present invention.

First, after the electronic shelf label 300-1 is activated by, for example, the power-on of the electronic shelf label 300-1, the transmission section 302 of the electronic shelf label 300-1 transmits the registration request signal through Step S2 (Step S501), and starts to wait for reception through Step S3. After the electronic shelf label 300-1 transmits the registration request signal, the relay apparatus 200 receives the registration request signal. After receiving the registration request signal, the relay apparatus 200 transmits the received registration request signal to the server apparatus 100 (Step S502). After the relay apparatus 200 transmits the registration request signal, the reception section 101 of the server apparatus 100 receives the registration request signal.

After the reception section 101 of the server apparatus 100 receives the registration request signal, the transmission destination registering section 102 registers, as the transmission destination of the display information, the electronic shelf label 300-1 in the transmission destination storage section 103. After the transmission destination registering section 102 registers the electronic shelf label 300-1 in the transmission destination storage section 103, the transmission signal control section 104 generates the response signal in response to the registration request signal. After the transmission signal control section 104 generates the response signal, the transmission section 106 transmits the generated response signal to the relay apparatus 200 (Step S503).

After the server apparatus 100 transmits the response signal, the relay apparatus 200 receives the response signal. After receiving the response signal, the relay apparatus 200 transmits the received response signal to the electronic shelf label 300-1 (Step S504).

During the response signal reception waiting period determined in advance, the electronic shelf label 300-1 is in the state of waiting for reception. If the relay apparatus 200 transmits the response signal during this period, the reception section 303 of the electronic shelf label 300-1 receives the response signal. After receiving the response signal, the electronic shelf label 300-1 starts synchronous communication with the server apparatus 100 through Step S5. This configuration enables the electronic shelf label 300-1 to wait for reception during a period necessary for receiving information in accordance with a transmission timing of the server apparatus 100 and to receive the information.

After the electronic shelf label 300-1 starts the synchronous communication, the transmission signal control section 104 of the server apparatus 100 generates the synchronization information indicating that the electronic shelf label 300-1 is in synchronization. After the transmission signal control section 104 generates the synchronization information, the transmission section 106 transmits the generated synchronization information to the relay apparatus 200 (Step S505). After the transmission section 106 transmits the synchronization information, the relay apparatus 200 receives the synchronization information. After receiving the synchronization information, the relay apparatus 200 transmits the received synchronization information to the electronic shelf label 300-1 (Step S506). The electronic shelf label 300-1 waits for reception during the period necessary for the reception in accordance with the transmission timing of the server apparatus 100, and hence, if the relay apparatus 200 transmits the synchronization information, the electronic shelf label 300-1 receives the synchronization information.

Note that, in a case in which the server apparatus 100 generates the display information to be displayed on the electronic shelf label 300-1 in accordance with the product information stored in the product information storage section 105 during the above-mentioned synchronous communication, the server apparatus 100 transmits the display information to the electronic shelf label 300-1 via the relay apparatus 200 based on the transmission timing of the synchronization signal. After the electronic shelf label 300-1 receives the display information, the display section (not shown) of the electronic shelf label 300-1 displays the received display information.

While the server apparatus 100 performs the synchronous communication with the electronic shelf label 300-1, the server apparatus 100 continues transmitting the synchronization information.

Next, description is given of operation performed by the electronic shelf label system in a case in which the electronic shelf label 300-1 and the electronic shelf label 300-2 fail to communicate with the server apparatus 100. Here, it is assumed that the asynchronous state elapsed time of the electronic shelf label 300-1 is 6 hours.

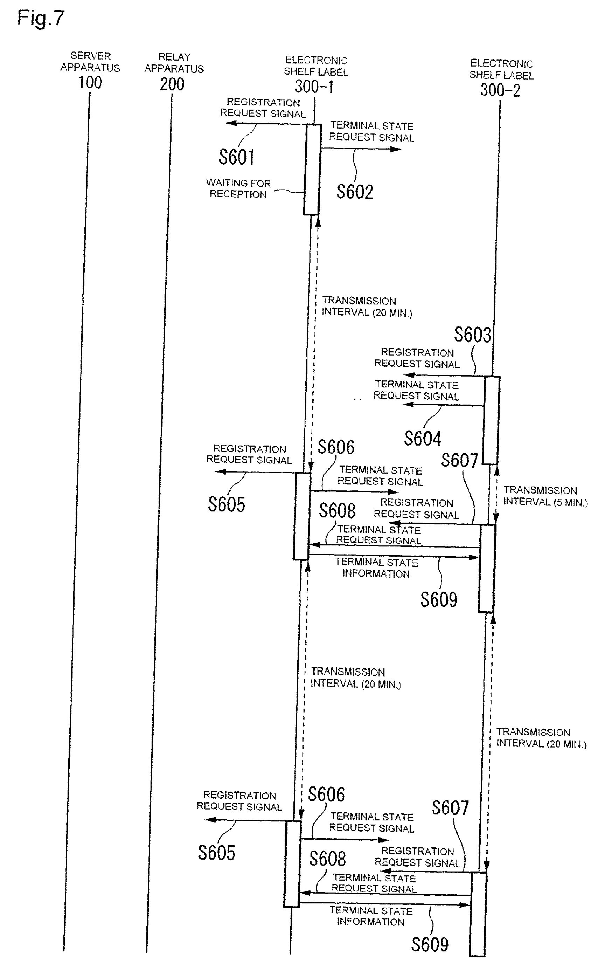

FIG. 7 is a second sequence diagram illustrating the operation of the electronic shelf label system according to the first embodiment of the present invention.

The operation of the electronic shelf label system illustrated in FIG. 7 is performed in the case in which the electronic shelf labels 300-1 and 300-2 fail to communicate with the server apparatus 100 according to the first embodiment of the present invention.

First, the electronic shelf label 300-1 transmits the registration request signal through Step S2 (Step S601). On this occasion, when the response signal is not received from the server apparatus 100 during the response signal reception waiting period determined in advance, the electronic shelf label 300-1 generates the terminal state request signal through Step S8, and then transmits the terminal state request signal to the other electronic shelf labels 300-2 to 300-N (Step S602). Here, it is assumed that when the electronic shelf label 300-1 transmits the terminal state request signal, the power of the electronic shelf label 300-2 is OFF.

When no terminal state information is transmitted from the other electronic shelf labels 300-2 to 300-N during the response signal reception waiting period determined in advance, the electronic shelf label 300-1 ends waiting for reception through Step S13. After the electronic shelf label 300-1 ends waiting for reception, the transmission interval determining section 308 determines the transmission waiting time based on the asynchronous state elapsed time through Step S15. Here, the asynchronous state elapsed time falls within a range of 6 hours or longer and shorter than 24 hours, and hence the transmission waiting time is set to 20 minutes in accordance with the transmission interval table illustrated in FIG. 4.

Next, after the electronic shelf label 300-2 is activated by, for example, the power-on of the electronic shelf label 300-2, the transmission section 302 of the electronic shelf label 300-2 transmits the registration request signal through Step S2 (Step S603). On this occasion, when the response signal is not received from the server apparatus 100 during the response signal reception waiting period determined in advance, the electronic shelf label 300-2 generates the terminal state request signal through Step S8, and then transmits the terminal state request signal to the other electronic shelf labels 300-1 and 300-3 to 300-N (Step S604). Here, it is assumed that when the electronic shelf label 300-2 transmits the terminal state request signal, the electronic shelf label 300-1 has already ended waiting for reception.

When no terminal state information is transmitted from the other electronic shelf labels 300-1 and 300-3 to 300-N during the response signal reception waiting period determined in advance, the electronic shelf label 300-2 ends waiting for reception through Step S13. After the electronic shelf label 300-2 ends waiting for reception, the transmission interval determining section 308 determines the transmission waiting time based on the asynchronous state elapsed time through Step S15. Here, the asynchronous state elapsed time falls within a range of 0 hours or longer and shorter than 6 hours, and hence the transmission waiting time is set to 5 minutes.

Next, when 20 minutes, which is the transmission waiting time, has elapsed after the waiting for reception is ended, the electronic shelf label 300-1 transmits the registration request signal through Step S2 (Step S605). On this occasion, when the response signal is not received from the server apparatus 100 during the response signal reception waiting period determined in advance, the electronic shelf label 300-1 generates the terminal state request signal through Step S8, and then transmits the terminal state request signal to the other electronic shelf labels 300-2 to 300-N (Step S606). Here, it is assumed that when the electronic shelf label 300-1 transmits the terminal state request signal, the electronic shelf label 300-2 has already ended waiting for reception.

When the electronic shelf label 300-1 has not ended waiting for reception after the electronic shelf label 300-1 transmits the terminal state request signal, if the electronic shelf label 300-2 transmits, after a lapse of 5 minutes of the transmission waiting time, the registration request signal (Step S607) and transmits the terminal state request signal (Step S608), the electronic shelf label 300-1 receives the terminal state request signal from the electronic shelf label 300-2. After the electronic shelf label 300-1 receives the terminal state request signal, the electronic shelf label 300-1 generates the terminal state information indicating that the transmission interval is 20 minutes, and then transmits the generated terminal state information to the electronic shelf label 300-2 (Step S609). After the electronic shelf label 300-2 receives the terminal state information from the electronic shelf label 300-1, through Step S10, the elapsed time setting section 311 updates the asynchronous state elapsed time of the asynchronous state elapsed time measuring section 310 to the shortest time period (6 hours) of the asynchronous state elapsed time associated with the transmission interval (20 minutes) indicated by the terminal state information.

After transmitting the terminal state information, the electronic shelf label 300-1 ends waiting for reception through Step S13. After the electronic shelf label 300-1 ends waiting for reception, the transmission interval determining section 308 determines the transmission waiting time based on the asynchronous state elapsed time through Step S15. On this occasion, the asynchronous state elapsed time falls within a range of 6 hours or longer and less than 24 hours, and hence the transmission waiting time is set to 20 minutes.

Meanwhile, after updating the asynchronous state elapsed time, the electronic shelf label 300-2 ends waiting for reception through Step S13. After the electronic shelf label 300-2 ends waiting for reception, the transmission interval determining section 308 determines the transmission waiting time based on the asynchronous state elapsed time through Step S15. On this occasion, the asynchronous state elapsed time is updated to 6 hours, and hence the transmission waiting time is set to 20 minutes.

In the same manner, the electronic shelf label 300-1 and the electronic shelf label 300-2 repeat the above-mentioned operation until the response signal is received from the server apparatus, or until the power supply is shut off with the asynchronous state elapsed time exceeding the predetermined time period for stopping the function of the corresponding terminal.

As described above, according to this embodiment, the electronic shelf labels 300-1 to 300-N each transmit the terminal state request signal to the other electronic shelf labels of the electronic shelf labels 300-1 to 300-N, and receive the terminal state information from the other electronic shelf labels of the electronic shelf labels 300-1 to 300-N. Based on the received terminal state information, the electronic shelf labels 300-1 to 300-N each update the asynchronous state elapsed time. With this configuration, the electronic shelf labels 300-1 to 300-N can shorten the asynchronous state elapsed time and make the transmission waiting time identical to that of the electronic shelf labels 300-1 to 300-N that have received the terminal state information. Therefore, the electronic shelf labels 300-1 to 300-N can lengthen the transmission waiting time, with the result that the power consumption is suppressed to be low.

### (Second Embodiment)

Hereinafter, with reference to the drawings, a second embodiment of the present invention is described in detail.

The second embodiment relates to an electronic shelf label system in which the electronic shelf label transmits a registration request signal containing the terminal state information to the server apparatus and other electronic shelf labels.

The electronic shelf label system according to the second embodiment has the same configuration as the electronic shelf label system according to the first embodiment. Further, a server apparatus 100 according to the second embodiment has the same configuration and operation as the server apparatus 100 according to the first embodiment.

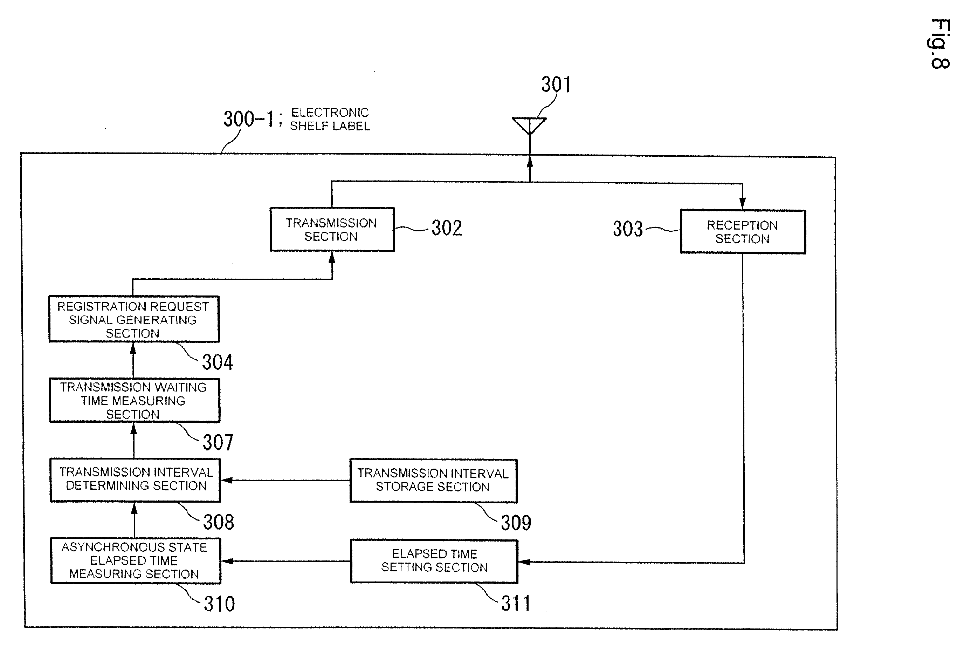

FIG. 8 is a schematic block diagram illustrating a configuration of an electronic shelf label according to the second embodiment of the present invention.

Electronic shelf labels 300-1 to 300-N according to the second embodiment of the present invention each have a configuration in which the terminal state request signal generating section 305 and the terminal state information generating section 306 are omitted, and the registration request signal generating section 304 of each of the electronic shelf labels 300-1 to 300-N generates the registration request signal containing the transmission interval of the registration request signal (terminal state information).

Hereinafter, description is given of operation of the electronic shelf label 300-1 according to the second embodiment of the present invention.

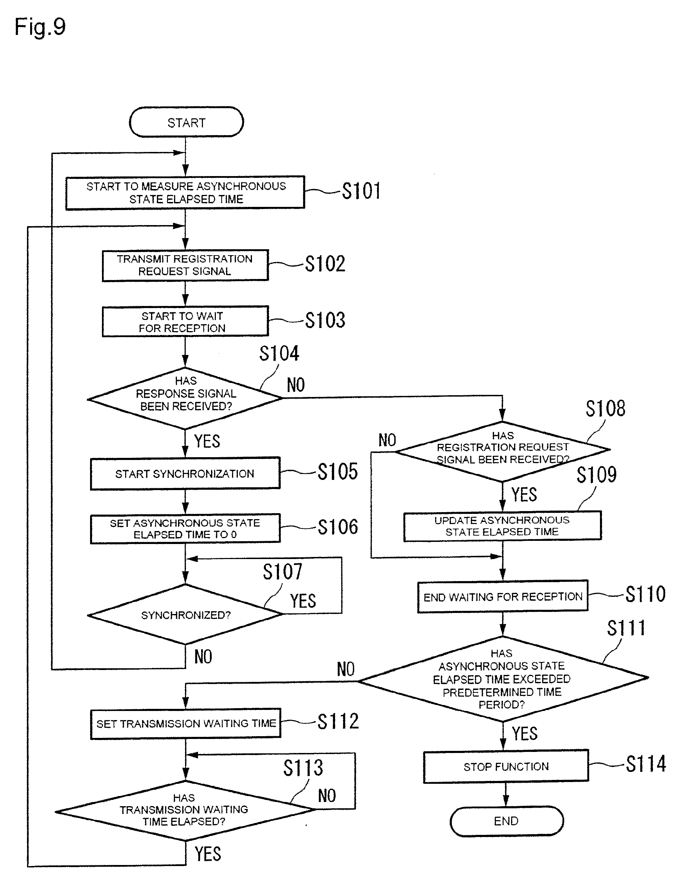

FIG. 9 is a flow chart illustrating the operation of the electronic shelf label according to the second embodiment of the present invention.

First, after the electronic shelf label 300-1 is activated by, for example, the power-on of the electronic shelf label 300-1, the asynchronous state elapsed time measuring section 310 starts to measure the asynchronous state elapsed time (Step S101). After the asynchronous state elapsed time measuring section 310 starts to measure the asynchronous state elapsed time, the registration request signal generating section 304 generates the registration request signal containing the transmission interval of the registration request signal. After the registration request signal generating section 304 generates the registration request signal, the transmission section 302 transmits the registration request signal to the server apparatus 100 via the relay apparatus 200 (Step S102). On this occasion, the other electronic shelf labels 300-2 to 300-N each receive the registration request signal transmitted by the electronic shelf label 300-1. After the transmission section 302 transmits the registration request signal, the reception section 303 starts to wait for reception (Step S103). After starting to wait for reception, the reception section 303 determines whether or not the response signal has been received during the response signal reception waiting period determined in advance (Step S104).

When the reception section 303 has received the response signal (Step S104: YES), the electronic shelf label 300-1 starts the synchronous communication with the server apparatus 100 via the relay apparatus 200 (Step S105). Specifically, with the reception of the response signal being a trigger, in accordance with the timing at which the server apparatus 100 transmits the synchronization information, the display information, and the like, the electronic shelf label 300-1 waits for reception during the period necessary for the reception of such information. With this configuration, the electronic shelf label 300-1 can periodically receive the synchronization information indicating that the electronic shelf label 300-1 is in synchronization from the server apparatus 100, and can receive the display information and the like. Note that, after receiving the display information, the reception section 303 registers the received display information in the storage section (not shown) of the electronic shelf label 300-1. After the reception section 303 registers the display information, the display section (not shown) of the electronic shelf label 300-1 displays the received display information.

Further, after the electronic shelf label 300-1 starts the synchronous communication, the elapsed time setting section 311 sets to 0 the asynchronous state elapsed time, which is being measured by the asynchronous state elapsed time measuring section 310, and the asynchronous state elapsed time measuring section 310 stops measuring the asynchronous state elapsed time (Step S106).

The reception section 303 determines, while the synchronous communication is performed, whether or not the synchronization information is received (Step S107). When it is determined by the reception section 303 that the synchronization information is received (Step S107: YES), the reception section 303 continues the synchronous communication.

When it is determined by the reception section 303 that the synchronization information is not received (Step S107: NO), the reception section 303 stops the synchronous communication. After the reception section 303 stops the synchronous communication, the processing returns to Step S101, and the measuring of the asynchronous state elapsed time is started again.

In Step S104, when it is determined that the reception section 303 has not received the response signal (Step S104: NO), the reception section 303 determines whether or not the registration request signal has been received from at least one of the other electronic shelf labels 300-2 to 300-N (Step S108). When it is determined by the reception section 303 that the registration request signal has been received from at least one of the other electronic shelf labels 300-2 to 300-N (Step S108: YES) , the elapsed time setting section 311 acquires, from the transmission interval storage section, the shortest time period, for example, of the asynchronous state elapsed time associated with the transmission interval contained in the received registration request signal. After acquiring the asynchronous state elapsed time, the elapsed time setting section 311 updates, to the acquired asynchronous state elapsed time, the asynchronous state elapsed time that is being measured by the asynchronous state elapsed time measuring section (Step S109).

When it is determined by the reception section 303 that the terminal state information has not been received from any of the other electronic shelf labels 300-2 to 300-N (Step S108: NO), or when the elapsed time setting section 311 has updated the asynchronous state elapsed time in Step S109, the reception section 303 ends waiting for reception (Step S110). After the reception section 303 ends waiting for reception, the transmission interval determining section 308 refers to the transmission interval table stored in the transmission interval storage section 309, to thereby determine whether or not the asynchronous state elapsed time, which is being measured by the asynchronous state elapsed time measuring section 310, has exceeded the predetermined time period for stopping the function of the corresponding terminal (Step S111). Whether or not the predetermined time period for stopping the function of the corresponding terminal has been exceeded is determined by, for example, determining whether or not the asynchronous state elapsed time has exceeded 168 hours with reference to the transmission interval table illustrated in FIG. 4.

When it is determined by the transmission interval determining section 308 that the asynchronous state elapsed time has not exceeded the predetermined time period for stopping the function of the corresponding terminal (Step S111: NO), the transmission interval determining section 308 refers to the transmission interval table stored in the transmission interval storage section 309, to thereby acquire the transmission interval associated with the asynchronous state elapsed time that is being measured by the asynchronous state elapsed time measuring section 310. After acquiring the transmission interval, the transmission interval determining section 308 sets the acquired transmission interval as the transmission waiting time to be measured by the transmission waiting time measuring section 307 (Step S112). The transmission waiting time measuring section 307 starts to measure the transmission waiting time. After starting to measure the transmission waiting time, the transmission waiting time measuring section 307 determines whether or not the measured transmission waiting time has exceeded the set transmission waiting time (Step S113). When it is determined that the measured transmission waiting time has not exceeded the set transmission waiting time (Step S113: NO), the transmission waiting time measuring section 307 continues measuring the transmission waiting time.

When it is determined that the transmission waiting time that is being measured by the transmission waiting time measuring section 307 has exceeded the set transmission waiting time (Step S113: YES), the processing returns to Step S102, in which the registration request signal is generated and transmitted.

When it is determined by the transmission interval determining section 308 that the asynchronous state elapsed time has exceeded the predetermined time period for stopping the function of the corresponding terminal (Step S111: YES) , the electronic shelf label 300-1 enters into the function-stopped state through processing of, for example, shutting off its own power supply (Step S114). With this configuration, it is possible to suppress the power consumption by stopping the function when synchronization with the server apparatus 100 cannot be achieved for a long period of time.

Note that, when the electronic shelf label 300-1 is in the function-stopped state, the electronic shelf label 300-1 can be powered on again by, for example, depressing the power button (not shown) thereof. Further, it is also possible to suppress the power consumption by forcibly shutting off the power supply by depressing and holding the power button while the electronic shelf label 300-1 is activated.

Next, description is given of operation of the electronic shelf label system according to the second embodiment of the present invention.

Operation performed by the electronic shelf label system in a case in which the electronic shelf label 300-1 succeeds in communicating with the server apparatus 100 is the same as the operation of the electronic shelf label system according to the first embodiment. Description is now given of operation performed by the electronic shelf label system in a case in which the electronic shelf label 300-1 and the electronic shelf label 300-2 fail to communicate with the server apparatus 100. Here, it is assumed that the asynchronous state elapsed time of the electronic shelf label 300-1 is 6 hours.

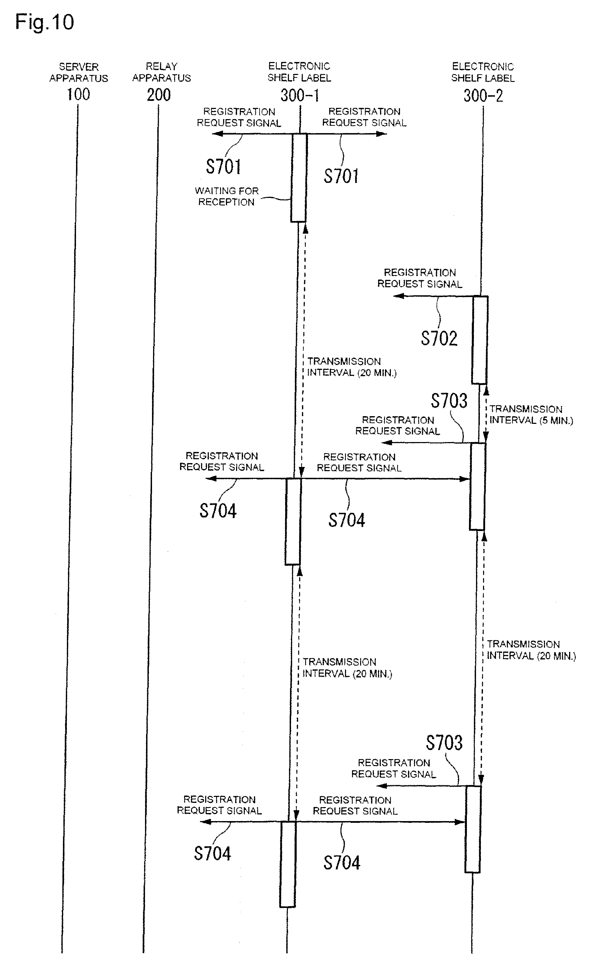

FIG. 10 is a sequence diagram illustrating the operation of the electronic shelf label system according to the second embodiment of the present invention.

The operation of the electronic shelf label system illustrated in FIG. 10 is performed in the case in which the electronic shelf labels fail to communicate with the server apparatus according to the second embodiment of the present invention.

First, the electronic shelf label 300-1 transmits the registration request signal through Step S102 (Step S701). On this occasion, when the response signal is not received from the server apparatus 100 during the response signal reception waiting period determined in advance, and also, no registration request signal is received from the other electronic shelf labels 300-2 to 300-N during the response signal reception waiting period determined in advance, the electronic shelf label 300-1 ends waiting for reception through Step S110. Here, it is assumed that when the electronic shelf label 300-1 transmits the registration request signal, the power of the electronic shelf label 300-2 is OFF.

After the electronic shelf label 300-1 ends waiting for reception, the transmission interval determining section 308 determines the transmission waiting time based on the asynchronous state elapsed time through Step S112. Here, the asynchronous state elapsed time falls within a range of 6 hours or longer and shorter than 24 hours, and hence the transmission waiting time is set to 20 minutes in accordance with the transmission interval table illustrated in FIG. 4.

Next, after the electronic shelf label 300-2 is activated by, for example, the power-on of the electronic shelf label 300-2, the transmission section 302 of the electronic shelf label 300-2 transmits the registration request signal through Step S102 (Step S702). On this occasion, when the response signal is not received from the server apparatus 100 during the response signal reception waiting period determined in advance, and also, no registration request signal is received from the other electronic shelf labels 300-1 and 300-3 to 300-N during the response signal reception waiting period determined in advance, the electronic shelf label 300-2 ends waiting for reception through Step S110. Here, it is assumed that when the electronic shelf label 300-2 transmits the registration request signal, the electronic shelf label 300-1 has already ended waiting for reception.

After the electronic shelf label 300-2 ends waiting for reception, the transmission interval determining section 308 determines the transmission waiting time based on the asynchronous state elapsed time through Step S112. Here, the asynchronous state elapsed time falls within a range of 0 hours or longer and shorter than 6 hours, and hence the transmission waiting time is set to 5 minutes.

Next, when 5 minutes, which is the transmission waiting time, has elapsed after the waiting for reception is ended, the electronic shelf label 300-2 transmits the registration request signal through Step S102 (Step S703). On this occasion, when the response signal is not received from the server apparatus 100 during the response signal reception waiting period determined in advance, it is determined through Step S108 whether or not the registration request signal has been received from the other electronic shelf labels 300-1 and 300-3 to 300-N.

When the electronic shelf label 300-2 has not ended waiting for reception after the electronic shelf label 300-2 transmits the registration request signal, if the electronic shelf label 300-1 transmits, after a lapse of 20 minutes of the transmission waiting time, the registration request signal (Step S704), the electronic shelf label 300-2 receives the registration request signal from the electronic shelf label 300-1. After the electronic shelf label 300-2 receives the registration request signal, through Step S109, the elapsed time setting section 311 updates the asynchronous state elapsed time of the asynchronous state elapsed time measuring section 310 to the shortest time period (6 hours) of the asynchronous state elapsed time associated with the transmission interval (20 minutes) contained in the registration request signal.

When the response signal is not received, after transmitting the registration request signal, from the server apparatus 100 during the response signal reception waiting period determined in advance, and also, no registration request signal is received from the other electronic shelf labels 300-2 to 300-N during the response signal reception waiting period determined in advance, the electronic shelf label 300-1 ends waiting for reception through Step S110. After the electronic shelf label 300-1 ends waiting for reception, the transmission interval determining section 308 determines the transmission waiting time based on the asynchronous state elapsed time through Step S112. On this occasion, the asynchronous state elapsed time falls within a range of 6 hours or longer and less than 24 hours, and hence the transmission waiting time is set to 20 minutes.

After updating the asynchronous state elapsed time, the electronic shelf label 300-2 ends waiting for reception through Step S110. After the electronic shelf label 300-2 ends waiting for reception, the transmission interval determining section 308 determines the transmission waiting time based on the asynchronous state elapsed time through Step S112. On this occasion, the asynchronous state elapsed time is updated to 6 hours, and hence the transmission waiting time is set to 20 minutes.

In the same manner, the electronic shelf label 300-1 and the electronic shelf label 300-2 repeat the above-mentioned operation until the response signal is received from the server apparatus 100, or until the power supply is shut off with the asynchronous state elapsed time exceeding the predetermined time period for stopping the function of the corresponding terminal.

As described above, according to this embodiment, the electronic shelf labels 300-1 to 300-N each transmit the registration request signal containing the transmission interval of the registration request signal to the other electronic shelf labels of the electronic shelf labels 300-1 to 300-N. Further, the electronic shelf labels 300-1 to 300-N each receive the registration request signal from the other electronic shelf labels of the electronic shelf labels 300-1 to 300-N, and based on the transmission interval contained in the received registration request signal, update the asynchronous state elapsed time. With this configuration, the electronic shelf labels 300-1 to 300-N can shorten the asynchronous state elapsed time and make the transmission waiting time identical to that of the electronic shelf labels 300-1 to 300-N that have received the registration request signal. Therefore, the electronic shelf labels 300-1 to 300-N can lengthen the transmission waiting time, with the result that the power consumption is suppressed to be low.

Hereinabove, with reference to the drawings, the first and second embodiments of the present invention have been described in detail. However, for a specific configuration, the present invention is not limited to the above-mentioned configurations, and various design modifications or the like may be made without departing from the spirit and scope of the present invention.

For example, in the first and second embodiments, there is given an example in which one relay apparatus 200 is provided. However, the present invention is not limited thereto, andaplurality of relay apparatuses 200 may be provided. Further, such a configuration may be employed that there is no relay apparatus 200 provided with the server apparatus 100 directly communicating with the electronic shelf labels 300-1 to 300-N.

Note that, in the first and second embodiments, there is given an example in which the transmission interval of the registration request signal is used as the terminal state information. However, the present invention is not limited thereto, and the asynchronous state elapsed time may be used as the terminal state information. In this case, by causing the elapsed time setting section 311 to update the asynchronous state elapsed time that is being measured by the asynchronous state elapsed time measuring section 310 to the received asynchronous state elapsed time, the same effect can be obtained.

Further, in the first embodiment, there is given an example in which when the electronic shelf label 300-1 is unable to receive the response signal from the server apparatus 100, the electronic shelf label 300-1 transmits the terminal state request signal to the electronic shelf labels 300-2 to 300-N. However, the present invention is not limited thereto, and, for example, the following processing may be performed.

The electronic shelf label 300-1 transmits the terminal state request signal containing current terminal state information on its own terminal. Then, the electronic shelf labels 300-2 to 300-N, which have received the terminal state request signal, each compare a current asynchronous state elapsed time or a current transmission interval of its own with the asynchronous state elapsed time or the transmission interval indicated by the terminal state information contained in the received terminal state request signal. On this occasion, when the received asynchronous state elapsed time or the received transmission interval is longer than the asynchronous state elapsed time or the transmission interval of its own terminal, the electronic shelf labels 300-2 to 300-N, which have received the terminal state request signal, may adopt the received asynchronous state elapsed time or the received transmission interval. Further, only when the received asynchronous state elapsed time or the received transmission interval is shorter than the asynchronous state elapsed time or the transmission interval of its own terminal, the electronic shelf labels 300-2 to 300-N, which have received the terminal state request signal, may transmit the terminal state information to the electronic shelf label 300-1.

The server apparatus 100 and the electronic shelf labels 300-1 to 300-N described above each include a computer systemprovided therein. Then, the operation of each of the above-mentioned processing sections is stored as a program in a computer-readable storage medium, and the computer reads out and executes the program, to thereby implement the above-mentioned processing. Here, examples of the computer-readable storage medium include a magnetic disk, a magneto-optical disk, a CD-ROM, a DVD-ROM, a semiconductor memory, and the like. Alternatively, the computer program may be distributed to the computer via communication lines, and a computer that has received the distribution may execute the program.

Further, the program described above may be intended for implementing a part of the functions described above. Still further, the program may include a so-called differential file (differential program), which is capable of implementing the functions described above in combination with a program already stored in the computer system.

### Industrial Applicability

The present invention is applicable to an electronic shelf label system in which an electronic shelf label receives display information through radio communication with a server apparatus and displays the display information, and also to such an electronic shelf label.

### Reference Signs List

- 100 ···: server apparatus
- 101: reception section
- 102: transmission destination registering section
- 103: transmission destination storage section
- 104: transmission signal control section
- 105: product information storage section
- 106: transmission section
- 200: relay apparatus
- 300-1 to 300-N: electronic shelf label
- 301: antenna section
- 302: transmission section
- 303: reception section
- 304: registration request signal generating section
- 305: terminal state request signal generating section
- 306: terminal state information generating section
- 307: transmission waiting time measuring section
- 308: transmission interval determining section
- 309: transmission interval storage section
- 310: asynchronous state elapsed time measuring section
- 311: elapsed time setting section

## Claims

1. An electronic shelf label system, comprising:
a server apparatus; and
a plurality of electronic shelf labels, each of which performs radio communication with the server apparatus to receive display information from the server apparatus and displays the display information,
wherein the server apparatus comprises:
registration request signal receiving means for receiving, from each of the plurality of electronic shelf labels, a registration request signal making a request that the each of the plurality of electronic shelf labels be registered as a transmission destination of the display information; and
response signal transmitting means for transmitting a response signal in response to the registration request signal when the registration request signal is received, and
wherein the each of the plurality of electronic shelf labels comprises:
registration request signal transmitting means for transmitting the registration request signal to the server apparatus at predetermined transmission intervals;
response signal receiving means for receiving the response signal from the server apparatus;
other-terminal state acquiring means for acquiring terminal state information when the response signal is not received, the terminal state information being information related to a transmission interval of the registration request signal of another electronic shelf label;
transmission interval synchronizing means for determining the transmission interval of the registration request signal based on the terminal state information of the another electronic shelf label; and
transmission interval determining means for extending, when the terminal state information is not acquired from the another electronic shelf label, the transmission interval of the registration request signal in a stepwise manner in accordance with a time length of an asynchronous state in which the response signal is not received from the server apparatus.

2. An electronic shelf label system according to claim 1,
wherein the other-terminal state acquiring means of the each of the plurality of electronic shelf labels comprises:
terminal state request signal transmitting means for transmitting, to the another electronic shelf label, a terminal state request signal making a request that the terminal state information be transmitted; and
terminal state information receiving means for receiving the terminal state information from the another electronic shelf label, and
wherein the each of the plurality of electronic shelf labels further comprises:
terminal state request signal receiving means for receiving the terminal state request signal; and
terminal state information transmitting means for transmitting the terminal state information.

3. An electronic shelf label system according to claim 1,
wherein the registration request signal transmitted by the registration request signal transmitting means of the each of the plurality of electronic shelf labels contains the terminal state information,
wherein the other-terminal state acquiring means of the each of the plurality of electronic shelf labels comprises other-terminal registration request signal receiving means for receiving the registration request signal transmitted by the another electronic shelf label, and
wherein the transmission interval synchronizing means of the each of the plurality of electronic shelf labels determines the transmission interval based on the terminal state information contained in the registration request signal transmitted by the another electronic shelf label.

4. An electronic shelf label system according to any one of claims 1 to 3, wherein the terminal state information comprises the transmission interval.

5. An electronic shelf label system according to any one of claims 1 to 3, wherein the terminal state information comprises the time length of the asynchronous state in which the response signal is not received from the server apparatus.

6. A processing method, which uses an electronic shelf label system comprising:
a server apparatus; and
a plurality of electronic shelf labels, each of which performs radio communication with the server apparatus to receive display information from the server apparatus and displays the display information,
the processing method comprising:
receiving, by registration request signal receiving means of the server apparatus, from each of the plurality of electronic shelf labels, a registration request signal making a request that the each of the plurality of electronic shelf labels be registered as a transmission destination of the display information;
transmitting, by response signal transmitting means of the server apparatus, a response signal in response to the registration request signal when the registration request signal is received;
transmitting, by registration request signal transmitting means of the each of the plurality of electronic shelf labels, the registration request signal to the server apparatus at predetermined transmission intervals;
receiving, by response signal receiving means of the each of the plurality of electronic shelf labels, the response signal from the server apparatus;
acquiring, by other-terminal state acquiring means of the each of the plurality of electronic shelf labels, terminal state information when the response signal is not received, the terminal state information being information related to a transmission interval of the registration request signal of another electronic shelf label;
determining, by transmission interval synchronizing means of the each of the plurality of electronic shelf labels, the transmission interval of the registration request signal based on the terminal state information of the another electronic shelf label; and
extending, by transmission interval determining means of the each of the plurality of electronic shelf labels, when the terminal state information is not acquired from the another electronic shelf label, the transmission interval of the registration request signal in a stepwise manner in accordance with a time length of an asynchronous state in which the response signal is not received from the server apparatus.

7. An electronic shelf label, which performs radio communication with a server apparatus to receive display information from the server apparatus and displays the display information,
the electronic shelf label comprising:
registration request signal transmitting means for transmitting a registration request signal to the server apparatus at predetermined transmission intervals, the registration request signal making a request that the electronic shelf label be registered as a transmission destination of the display information;
response signal receiving means for receiving, from the server apparatus, a response signal in response to the registration request signal;
other-terminal state acquiring means for acquiring terminal state information when the response signal is not received, the terminal state information being information related to a transmission interval of the registration request signal of another electronic shelf label existing within a communicable range;
transmission interval synchronizing means for determining the transmission interval of the registration request signal based on the terminal state information of the another electronic shelf label; and
transmission interval determining means for extending, when the terminal state information is not acquired from the another electronic shelf label, the transmission interval of the registration request signal in a stepwise manner in accordance with a time length of an asynchronous state in which the response signal is not received from the server apparatus.

8. A program for causing an electronic shelf label, which performs radio communication with a server apparatus to receive display information from the server apparatus and displays the display information, to operate as:
registration request signal transmitting means for transmitting a registration request signal to the server apparatus at predetermined transmission intervals, the registration request signal making a request that the electronic shelf label be registered as a transmission destination of the display information;
response signal receiving means for receiving, from the server apparatus, a response signal in response to the registration request signal;
other-terminal state acquiring means for acquiring terminal state information when the response signal is not received, the terminal state information being information related to a transmission interval of the registration request signal of another electronic shelf label existing within a communicable range;
transmission interval synchronizing means for determining the transmission interval of the registration request signal based on the terminal state information of the another electronic shelf label; and
transmission interval determining means for extending, when the terminal state information is not acquired from the another electronic shelf label, the transmission interval of the registration request signal in a stepwise manner in accordance with a time length of an asynchronous state in which the response signal is not received from the server apparatus.
